# EUROPEAN PATENT SPECIFICATION

(11) **EP 0 411 536 B1**
(45) Date of publication and mention of the grant of the patent: **08.11.1995**
(21) Application number: 90114592.0
(22) Date of filing: 30.07.1990
(51) Int. Cl.: B29B 9/06

(54) **Process and apparatus for producing pellets**
Verfahren und Vorrichtung zur Herstellung von Pellets
Procédé et dispositif pour la production de granulés

(30) Priority: 31.07.1989 JP 199606/89
(43) Date of publication of application: 06.02.1991
(73) Proprietor: KURARAY CO., LTD., Kurashiki-City (JP)
(72) Inventor: Noda, Shuhei, Akashi-City (JP); Hashimoto, Kiyoji, Okayama-City (JP)
(74) Representative: VOSSIUS & PARTNER

(56) References cited:
- EP-A- 0 143 944
- EP-A- 0 243 732
- DE-U- 8 600 491
- FR-A- 2 354 869
- US-A- 3 837 781
- KUNSTSTOFFE, vol. 76, no. 5, May 1986, page 418, Munich, DE; "Automatisch einfädelnder Stranggranulierer"

## Description

The present invention relates to a process and apparatus for producing pellets according to the precharacterising portions of claims 1 and 3 respectively.

A strand cutter comprising feed rolls, a fixed blade and a rotary blade is generally used for cutting strand-shaped articles, which are obtained by melt extruding a thermoplastic resin or extruding a solution thereof through a die plate into an liquid, into pellets having a length of 1.0 to 5.0 mm. The cutter can well cut strands having a hardness or rigidity of some degree, but it can hardly cut soft and flexible strands into pellets having no obliquely cut surface and having a uniform cut length.

For example, Japanese Patent Kohyo No. 500169/1981 discloses a process which comprises using an apparatus in which the upper one of a pair of feed rolls is located a little ahead of the lower one, and passing strands through the two rolls to a support having at the top thereof a fixed blade and cutting them into pellets. This apparatus, however, cannot cut flexible strands into uniform pellets either.

In the case where a multiplicity of flexible strands are cut with a conventional strand cutter, when trying to introduce the strands by hand one by one between a pair of, i.e., upper and lower, rolls, it is neccesary to bring the hand close to the feed rolls because of the flexibility of the strands. As a result, there may occur a risk of pinching of the hand and, furthermore, a considerably long time is required for the completion of the introduction. In particular, in the case where at least one hundred of strands are introduced, strand loss is extremely high during the time for the completion of the introduction work, which is not preferred. On the other hand, trial for introducing a strand bundle results in twist of the bundle caused by overlapping before the feed rolls, thereby disturbing the feed of the strands to give pellets obliquely cut or having an uneven cut length.

Even if many strands could have been introduced into the feed rolls while being laid parallelly, the strands will, because of the flexibility thereof, vigorously vibrate vertically and horizontally between the feed rolls and the rotary blade owing to impact, repulsion or the like at each cutting to give pellets obliquely cut or having an extremely uneven cut length. The employment of the thus-obtained pellets being ill-shaped or having an uneven cut length in extrusion results in fluctuations in amounts charged to the extruder, fluctuations in load of the extruder or the like, thereby rendering it difficult to constantly obtain uniform molded articles.

US-A-3837781 discloses a device for cooling and granulating strands of plastic material discharged from an extruder comprising a belt conveyor having lengthwise grooves on the conveyor band. This known device further comprises a pressure roller having circumferential counter grooves on the roller for pressing their strands into the lengthwise counter grooves on the conveyor band.

EP-A-0143944 discloses a device for cooling and granulating extruded thermoplastic synthetic resin comprising upper and lower feed rolls and a belt conveyor slanted down forward for feeding strands to a support having a fixed blade thereof and a rotary blade for cutting said strands.

KUNSTSTOFFE, vol. 76, number 5, May 1986, page 418, "Automatisch einfädelnder Stranggranulierer" discloses a device for granulating polymer strands which automatically introduces the strands between two belt conveyors pinching the strands between them. This known device further comprises an upper and lower feed roll and a drying device disposed between the upper and lower feed rolls and the two belt conveyors and a fixed blade and a rotary blade for cutting the strands.

EP-A-0243732 discloses a fixed blade for a device for granulating which cooperates with a rotary blade.

DE-U-8600491 discloses a device for granulating strands of thermoplastic synthetic resin in which water is used for cooling the strands. This water is applied to the strands between a feeding funnel and a cutting means comprising a fixed blade and a rotary blade.

It is the object of the present invention to provide a method and an apparatus for cutting a multiplicity of flexible strands smoothly in order to obtain a straight cut surface and an extremely uniform cutlength.

According to the invention, the solution of this object is given in claims 1 and 3.

Particular embodiments of the invention are disclosed in the dependent claims 2, 4 and 5.

The present inventors had intensively studied to solve the above-described problems and, as a result, found that, in intoducing many strands into the feed rolls while laying them transversely parallel, it is effective to mount a belt conveyer slanted down forward just before the pair of feed rolls and a press roll for pressing the strands on the slanted conveyer. The use of a conveyer as a means for introducing strands into a strand cutter is known. However, it is extremely difficult to place a multiplicity of flexible strands as aimed at by the present invention on a belt conveyer while laying the strands parallelly. When the ends of the strands reach the conveyer, the strands tend to bend in the directions different from the moving direction of the belt or overlap with each other on the belt, and hence the direct introduction of such strands between the upper and lower feed rolls results in the deviation of the strands from the feed rolls or the twist of the strands themselves. By employing a belt conveyer, which is slanted down forward, with a press roll mounted thereon, it is possible to place the ends of the strands parallel with the advancing direction on the belt conveyer, to disintegrate, the strands which have overlapped on the belt into parallelly laid strands by the press roll, and to introduce the strands smoothly as they are between the upper and lower feed rolls. The inclined angle of the belt conveyer to the horizontal plane is at least 20°, preferably at least 30°, and not more than 80° in practical use. It is preferred that the speed of the belt conveyer be a little lower than the take-up speed of the upper and lower feed rolls. As the raw materials for the belt of the belt conveyer, there can be used various rubbers and flexible resins such as polyvinyl alcohol. It is also necessary that the press roll press the strands on the belt conveyer by use of the weight of the roll itself, spring pressure or air pressure. In this case, however, too large pressing force of the press roll will cause a failure in introducing strands between the press roll and the belt, formation of deformed strands or the like. On the other hand, too small force will allow the press roll to be brought up by ovelapped strands, whereby the overlapped strands pass under the roll as they are. It is therefore preferred that the press roll be adjustable for the purpose of selecting an appropriate force. Furthermore, it is effective that the press roll be so mounted that the clearance between the press roll and the belt conveyer will be equal to or a little smaller than the maximum length of the strand cross section for the purpose of the smooth introduction between the roll and conveyer without fail.

The present inventors further found that the horizontal and vertical vibration of the strands can be minimized by, when the strands having passed between the upper and lower feed rolls are introduced to a support having a fixed blade on the head thereof, spraying a liquid onto the strand from above the support, thereby permitting the strands to be cut smoothly with a rotary blade.

Water or an organic liquid which does not exert bad influences on the strands, or mixtures of water and this liquid can be used as the spraying liquid. The amount sprayed may be such that the surfaces of the strands are fully moisted, and too much amount will disturb strand movement by the liquid flow, which is not preferred. It is therefore desired that the amount sprayed be adjustable judging from the strand movement. It is also preferred that spraying direction be radial and perpendicular to the strand movement.

As stated heretofore, pellets having a straight cut surface and an extremely uniform cut length can be obtained by introducing strands between the upper and lower feed roll using a belt conveyer slanted down forward with a press roll mounted thereon and then passing the strands to a support having a fixed blade on the head thereof, and, thereafter, cutting the strands with a rotary blade while spraying a liquid from above the support. In the case where anyone of these conditions is not satisfied, the above-described effects cannot be produced as is apparent from the Reference Examples described later herein.

Furthermore, in the present invention, it was found that, for the purpose of obtaining pellets having good cut surface and a uniform cut length, the following conditions will enhance the effects. The upper one of the two feed rolls is located a little ahead of the lower one and the tangential plane at the contact point of the upper and lower rolls crosses the upper surface of a support having a fixed blade at the head thereof which is mounted between the lower roll and a rotary blade; in addition, the distance between the contact point of the upper and lower feed rolls and the end of the fixed blade is adjusted to not more than 70 mm, preferably not more than 60 mm. By employing these conditions, the strands having passed between the upper and lower feed rolls are perfectly pressed on the upper surface of the support having a fixed blade on the head thereof. In combination with this result, the above-described liquid spraying from above the support almost perfectly suppresses the horizontal and perpendicular vibration, thereby giving pellets having good cut surface and an extremely uniform cut length without oblique cut. The upper surface of the support as referred to herein also includes, in the case where a scraper is equipped between the lower feed roll and the support and plays a role as support, the upper surface of the scraper.

An example of the particularly preferred strands used in the present invention is such a flexible resin strand that will, when placed on a horizontal table and pulled out of the end of the table by 10 cm, hang down by its weight at 20°C so that the height from the tip end of the strand to the horizontal plane of the horizontal table will be 3 to 9 cm. Examples of the raw material for these strands are various thermoplastic resins, elastomers and rubbers, among which preferred is an ethylene-vinyl alcohol copolymer.

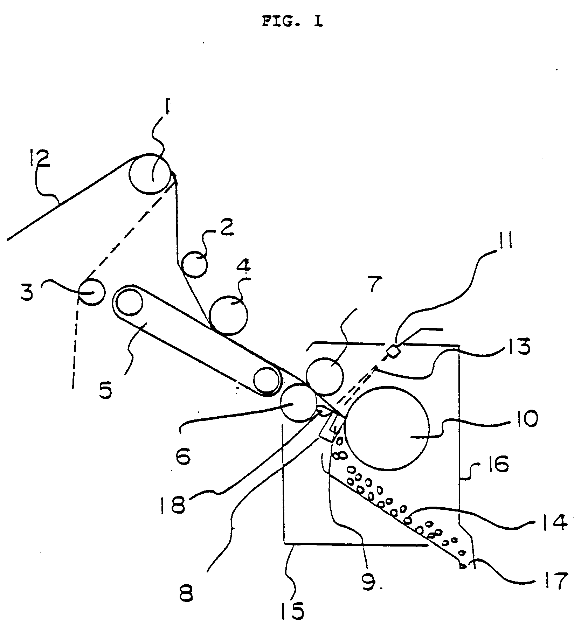

A more complete appreciation of the invention and many of the attendant advantages thereof will be readily obtained as the same become better understood by reference to the following detailed description when considered in connection with the accompanying drawing, wherein: Figure 1 is an example showing the process and apparatus of the present invention, where
- 1, 2 and 3: Guide rolls
- 4: Press roll
- 5: Belt conveyer
- 6 and 7: A pair of, i.e., Upper and Lower feed rolls
- 8: Support
- 9: Fixed blade
- 10: Rotary blade
- 11: Spraying nozzle
- 12: Strand
- 13: Spraying liquid
- 14: Pellets
- 15 and 16: Protecting covers
- 17: Outlet for pellets and spraying liquid
- 18: Scraper

Figure 1 is an example of the apparatus for practicing the process of the present invention. The outline of this is explained with reference to Figure 1 as follows. Strand bundle 12 is passed through rolls 1 and 3, and allowed to run downward continuously before belt conveyer 5. In the meantime, strands 12 are laid nearly parallelly on roll 1. Thereafter, the strands between rolls 1 and 3 are cut with a cutting device such as a pair of scissors and the cut ends of the strands are, through roll 2, laid on belt conveyer 5 slanted down forward. The strands are laid perfectly parallelly by action of roll 4, then introduced between the two feed rolls 6 and 7 of a strand cutter (Upper feed roll 7 is located a little ahead of lower feed roll 6), sprayed, while being pressed on the upper surfaces of scraper 18 and support 8 having fixed blade 9 on the head thereof, with spraying liquid 13 from spray nozzle 11 above the support, and cut with the strand cutter comprising support 9, fixed blade 9 and rotary blade 10 to give pellets 14 having no obliquely cut surface and having a uniform cut length. Cut pellets are taken, together with the spraying liquid, out of outlet 17 and then subjected to processes such as liquid separation, washing and drying to be desired pellets. Items 15 and 16 are protecting covers for feed rollers 6 and 7 and strand cutters 8, 9 and 10.

The present invention is particularly suitable for obtaining pellets from strands having a thick diameter. The diameter is at least 1 mm, preferably at least 2 mm and not more than 5 mm, preferably not more than 4 mm. The length of the pellet is 1 to 8 mm, preferably 1 to 5 mm.

Other features of the invention will become apparent in the course of the following descriptions of exemplary embodiments which are given for illustration of the invention and are not intended to be limiting thereof.

### Example 1

A solution comprising 31 parts of an ethylene-vinyl alcohol copolymer having an ethylene content of 32 mol% and a saponification degree of vinyl acetate component of 99 mol%, 46 parts of methanol and 23 parts of water was extruded through a die with 50 holes having a pore size of 4 mm into a mixed liquid of water and methanol (10 wt%) at 20°C to coagulate into strands. A piece of the thus-obtained strands is sampled by about 20 cm in length and this sample was placed on a horizontal table, while extending out of the end of the table by 10 cm, and allowed to hang at 20°C. The height from the tip end of the strand to the horizontal plane of the table was 6.1 cm.

This strand bundle comprising 50 pieces of strand was cut with the apparatus illustrated in Figure 1 to give pellets. Details of the apparatus employed and the operating conditions are as follows:
- Belt conveyer 5:: Belt width: 400 mm
Belt length: 400 mm
Inclined angle to the horizontal plane: 30°
Raw material of belt: rubber
Speed of belt conveyer: 14.7 m/min
- Press roll 4:: Diameter: 90 mm
Width : 400 mm
- Strand cutter 8, 9 and 10:: Width of rotary blade 10 : 400 mm
Diameter of rotary blade 10: 200 mm
Number of tooth : 32
Diameter of upper feed roll 7: 90 mm
Diameter of lower feed roll 6: 80 mm
Revolution speed of upper and lower feed
rolls: 15.0 m/min
Distance between the contact point of the
upper and lower feed rolls and the top end of fixed blade 9: 50 mm

The tangential plane at the contact point of the upper and lower feed rolls is parallel with the upper surface of support 8 having fixed blade 9 on the head thereof and the upper surface of scraper 18. Spraying: water is sprayed at a rate of 4 l/min between the feed roll and the rotary blade in the direction perpendicular to the strand flow using an oblate fan-shaped spraying nozzle.

The strand bundle was arranged parrallelly after passing through press roll 4 of the belt conveyer, and extremely smoothly introduced between upper and lower feed rolls without forming twist of the bundle at all before the feed rolls. Furthermore, the pellets obtained by cutting with the strand cutter had no obliquely cut surface at all and had an average cut length of 3.3 mm and a standard deviation of length of 0.30 mm.

### Example 2

The same procedure as in Example 1 was followed except for changing the position of upper feed roll 7 such that the tangential section at the contact point of the feed rolls 6 and 7 would cross the upper surface of scraper 18 to give pellets articles having an average cut length of 3.2 mm and a standard deviation of length of 0.11 mm.

### Reference Example 1

The press roll equipped on the belt conveyer in Example 1 was removed and then a strand bundle was introduced. The strands on the belt, when introduced as they were between the feed rolls of the strand cutter, formed a twist of the strands before the feed rolls, thereby generating horizontal and vertical vibration between the feed rolls and the rotary blade. Hence the pellets obtained had obliquely cut surface and had a standard deviation of length of 0.70 mm.

### Reference Example 2

The same procedure as in Example 1 was followed except for positioning the belt conveyer horizontally to give a result that part of the strand bundle is placed on the belt of the belt conveyer while being folded in the direction other than the moving direction of the belt, turned the way aside and did not enter between the press roll and the belt, and hence could not be introduced into the strand cutter.

### Reference Example 3

The same procedure as in Example 1 was followed except that water was not sprayed between the upper and lower feed rolls and the rotary blade to give pellets, which had many obliquely cut surfaces and had an average cut length of 3.4 mm and a standard deviation of 0.60 mm.

Obviously, numerous modifications and variations of the present invention are possible in light of the above teachings. It is therefore to be understood that, within the scope of the appended claims, the invention may be practiced otherwise than as specifically described herein.

## Claims

1. A process for producing pellets (14) which comprises the steps of introducing strands (12) between upper and lower feed rolls (7, 6) using a conveyor (5) slanted down forward, then introducing said strands (12) to a support (8) having a fixed blade (9) on the head thereof and cutting said strands (12) with a rotary blade (10)
characterized by further comprising the steps of using a belt conveyer (5) for introducing the strands (12), pressing said strands (12) onto said belt conveyor (5) by a press roll (4) and
spraying a liquid (13) onto said strands (12) from above said support (8) while cutting said strands (12).

2. A process for producing pellets according to Claim 1, wherein said strand (12) is a resin strand that will, when laid on a table such that its end extends over the end of said table by 10 cm, hang down by its weight to the height from the tip end of said strand to the horizontal plane of said table of 3 to 9 cm.

3. An apparatus for producing pellets comprising upper and lower feed rolls (7, 6) and a conveyor (5) slanted down forward for feeding strands (12) to a support (8) having a fixed blade (9) on the head thereof and a rotary blade (10) for cutting said strands (12),
characterized in that
said conveyor is a belt conveyor (5), and by
a press roll (4) for pressing said strands onto said belt conveyor (5) and
a spraying nozzle (11) for spraying liquid (13) onto said strands (12) from above said support (8).

4. An apparatus for producing pellets according to Claim 3, wherein the tangential plane at the contact point of said upper and lower feed rolls (7, 6) crosses the upper surface of said support (8) having said fixed blade (9) on the head thereof.

5. An apparatus for producing pellets according to Claim 3 or 4, wherein the distance between the contact point of said two upper and lower feed rolls (7, 6) and the head of said fixed blade (9) of said support (8) is not more than 70 mm.

## Patentansprüche

1. Verfahren zur Herstellung von Pellets (14), das die Schritte aufweist: Einführen von Strängen (12) zwischen obere und untere Vorschubrollen (7, 6) unter Verwendung eines sich vorwärts nach unten neigenden Förderers (5), dann Einführen der Stränge (12) auf eine Auflage (8) mit einer ortsfesten Klinge (9) auf ihrem Kopfteil und Schneiden der Stränge (12) mit einer rotierenden Klinge (10), dadurch gekennzeichnet, daß es weiter die Schritte aufweist: Verwenden eines Bandförderers (5) zum Einführen der Stränge (12), Drücken der Stränge (12) auf den Bandförderer (5) durch eine Preßwalze (4) und Sprühen einer Flüssigkeit (13) von oberhalb der Auflage (8) auf die Stränge (12), während die Stränge (12) geschnitten werden.

2. Verfahren zur Herstellung von Pellets nach Anspruch 1, wobei der Strang (12) ein Harzstrang ist, der, wenn er derart auf einen Tisch gelegt wird, daß sein Ende um 10 cm über das Ende des Tisches hinausragt, durch sein Gewicht nach unten hängt, wobei die Höhe des äußersten Endes des Strangs gegen die Horizontalebene des Tisches 3 bis 9 cm ist.

3. Vorrichtung zur Herstellung von Pellets, die aufweist: obere und untere Vorschubrollen (7, 6) und einen sich vorwärts nach unten neigenden Förderer (5) zum Zuführen von Strängen (12) an eine Auflage (8) mit einer ortsfesten Klinge (9) auf ihrem Kopfteil und einer rotierenden Klinge (10) zum Schneiden der Stränge (12), gekennzeichnet dadurch, daß der Förderer ein Bandförderer (5) ist, und durch eine Preßwalze (4) zum Drücken der Stränge auf den Bandförderer (5) und eine Sprühdüse (11) zum Sprühen von Flüssigkeit (13) von oberhalb der Auflage (8) auf die Stränge (12).

4. Vorrichtung zur Herstellung von Pellets nach Anspruch 3, wobei die Tangentialebene am Berührungspunkt der oberen und unteren Vorschubrollen (7, 6) die obere Oberfläche der Auflage (8) mit der ortsfesten Klinge (9) auf ihrem Kopfteil schneidet.

5. Vorrichtung zur Herstellung von Pellets nach Anspruch 3 oder 4, wobei der Abstand zwischen dem Berührungspunkt der beiden oberen und unteren Vorschubrollen (7, 6) und dem Kopfteil der ortsfesten Klinge (9) der Auflage (8) nicht mehr als 70 mm beträgt.

## Revendications

1. Un procédé pour la production de granulés (14) qui comprend les étapes consistant à introduire des cordons (12) entre des rouleaux d'alimentation supérieur et inférieur (7,6) en utilisant un transporteur (5) incliné vers le bas vers l'avant puis à introduire lesdits cordons (12) sur un support (8) ayant une lame fixe (9) sur sa tête et à découper lesdits cordons (12) avec une lame rotative (10), caractérisé en ce qu'il comprend, en outre, les étapes consistant à utiliser un transporteur à courroie (5) pour introduire les cordons (12), à presser lesdits cordons (12) sur ledit transporteur à courroie (5) par un rouleau de pressage (4) et à projeter un liquide (13) sur lesdits cordons (12) à partir du dessus dudit support (8) tout en découpant lesdits cordons (12).

2. Un procédé pour la production de granulés selon la revendication 1, dans lequel ledit cordon (12) est un cordon de résine qui sera, lorsqu'il est déposé sur une table telle que son extrémité se prolonge, sur l'extrémité de ladite table de 10 cm, suspendu vers le bas par son poids à la hauteur à partir de l'extrémité de pointe dudit cordon au plan horizontal de ladite table de 3 à 9 cm.

3. Un appareil pour la production de granulés comprenant des rouleaux d'alimentation supérieur et inférieur (7,6) et un transporteur (5) incliné vers le bas vers l'avant pour alimenter des cordons (12) à un support (8) ayant une lame fixe (9) sur sa tête et une lame rotative (10) pour découper lesdits cordons (12), caractérisé en ce que ledit transporteur est un transporteur à courroie (5) et en ce qu'il comprend un rouleau de pressage (4) pour presser lesdits cordons sur ledit transporteur à courroie (5) et une buse de projection (11) pour projeter un liquide (13) sur lesdits cordons (12) à partir du dessus dudit support (8).

4. Un appareil pour la production de granulés selon la revendication 3, dans lequel le plan tangentiel au point de contact desdits rouleaux d'alimentation supérieur et inférieur (7,6) croise la surface supérieure dudit support (8) ayant ladite lame fixe (9) sur sa tête.

5. Un appareil pour la production de granulés selon la revendication 3 ou 4, dans lequel la distance entre le point de contact desdits deux rouleaux d'alimentation supérieur et inférieur (7,6) et la tête de ladite lame fixe (9) dudit support (8) n'est pas supérieure à 70 mm.
